# EUROPEAN PATENT APPLICATION

(11) **EP 3 101 241 A1**
(43) Date of publication of application: **07.12.2016**
(21) Application number: 15742788.1
(22) Date of filing: 28.01.2015
(51) Int. Cl.: F01L 1/356, F01M 1/02, F01M 1/06, F02D 13/02

(54) **HYDRAULIC CIRCUIT FOR INTERNAL COMBUSTION ENGINE**

(30) Priority: 31.01.2014 JP 2014016506
(71) Applicant: Mikuni Corporation, Tokyo 101-0021 (JP)
(72) Inventor: KUSANAGI, Hideaki, Takizawa-shi Iwate 020-0698 (JP)
(74) Representative: Vossius & Partner Patentanwälte Rechtsanwälte mbB
(86) International application number: PCT/JP2015/052272
(87) International publication number: WO 2015/115450

(57) **Abstract**

In a hydraulic circuit including a second oil pump (21) as a dedicated pump for supplying oil pressure to a WT (23, 24), the exhaust side VVT (24) has a rotor and a return spring for holding the rotor in a most advance angle state in stoppage of an engine. By obtaining driving force of the second oil pump (21) from an exhaust side camshaft (26) to which the rotor is connected, it is possible to reduce an increase in a torque required for operating the exhaust side WT (24) through energizing force of the return spring.

## Description

### TECHNICAL FIELD

The present invention relates to a hydraulic circuit for an internal combustion engine, and more particularly, is suitably used in a hydraulic circuit for an internal combustion engine including a variable valve timing mechanism for optimally controlling an open/close timing of an intake/exhaust valve depending on an operating state.

### BACKGROUND ART

In general, an internal combustion engine (for example, a four-stroke engine to be used for a motorcycle, an outboard motor or a snowmobile) is provided with an oil pump for supplying oil from an oil pan disposed in an engine bottom portion to each mechanism unit in an upper part thereof. Specifically, oil pressure fed from the oil pump is supplied to a camshaft or a crankshaft through a cylinder head. Consequently, each mechanism unit such as the camshaft or the crankshaft is lubricated and cooled by the oil.

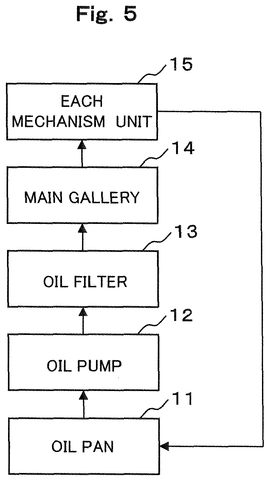

FIG. 5 is a diagram showing a passage for oil in the engine. As shown in FIG. 5, the oil stored in an oil pan 11 is sucked by an oil pump 12 and is pressure fed to a main gallery 14 through an oil filter 13. Then, the oil is supplied from the main gallery 14 to various mechanism units 15, and finally drops by its own weight and returns to the oil pan 11.

In some cases, the engine is provided with a control mechanism referred to as a variable valve timing mechanism (WT). The WT is used for optimally controlling an open/close timing of an intake/exhaust valve of a cam depending on an operating state, thereby achieving compatibility of an enhancement in torques in low and medium speed regions and an enhancement in an output in a high speed region, a reduction in Nox, an enhancement in fuel consumption and the like. Control of oil pressure for controlling the open/close timing of the intake/exhaust valve is performed by an oil control valve (OCV) .

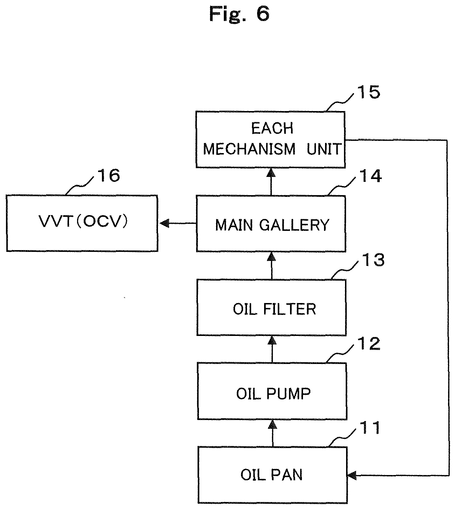

FIG. 6 is a diagram showing a passage for oil of an engine including the WT. As shown in FIG. 6, the oil is supplied from the main gallery 14 to a WT (OCV) 16 in addition to various mechanism units 15 and the open/close timing of the intake/exhaust valve is controlled by oil pressure of the oil.

In order to operate the WT 16 with a high responsiveness while ensuring the oil pressure for each mechanism unit 15, it is necessary to increase oil pressure of the main gallery 14 as compared with the case in which the WT 16 is not provided. For this purpose, it is necessary to increase oil pressure of the oil pump 12 which is pressure at a source. However, there is consequently caused a problem in that a capacity of the oil pump 12 is increased and a pump space is thus enlarged, resulting in an increase in a size of the engine.

On the other hand, there is known that a dedicated pump for the WT 16 is provided in addition to the oil pump 12 to enable a reduction in necessary oil pressure as a whole and a decrease in the size of the engine (for example, see Patent Document 1). The hydraulic circuit for the engine described in the Patent Document 1 includes the first hydraulic pump and the second hydraulic pump which are to be driven synchronously with the crankshaft. The first hydraulic pump supplies, to the main gallery of the engine, oil regulated into predetermined pressure by the first relief valve. On the other hand, the second hydraulic pump sucks the oil from the main gallery and supplies the oil to the valve control device. In other words, the second hydraulic pump corresponds to a WT dedicated pump.

In the case in which a dedicated pump for supplying the oil pressure from the main gallery 14 to the WT 16 is provided, piping can be shortened if the dedicated pump is provided in the vicinity of the cylinder head to be another oil pressure supply destination from the same main gallery 14. Therefore, this is preferable because a pressure drop can be suppressed. In that case, it is supposed that power for driving the dedicated pump is obtained from the camshaft stored in the cylinder head. In other words, the camshaft is rotated by power transmitted from the crankshaft by a timing chain. The power of the dedicated pump is obtained by utilization of the rotation. There is conventionally known acquirement itself of power of the oil pump from the camshaft which is not the dedicated pump for the WT (for example, see Patent Document 2).

Patent Document 1 : Japanese Patent No. 3507649
Patent Document 2 : Japanese Patent No. 3368785

### DISCLOSURE OF THE INVENTION

In the case in which the power for the dedicated pump of the WT is obtained from the camshaft, however, the driving force of the camshaft is increased corresponding to at least the power so that a necessary torque for operating the WT is increased correspondingly. For this reason, a load of the WT required for changing a rotation phase of the camshaft is increased. As a result, it is necessary to increase the driving force of the WT itself in order to operate the WT with a high responsiveness, which is not preferable because an increase in the size of the WT and a rise in the oil pressure are required.

The present invention has been made to solve the problem and has an object to reduce a load of a WT and enable the WT to be operated with a high responsiveness without requiring an increase in a size and a rise in oil pressure in a hydraulic circuit for an internal combustion engine provided with a dedicated pump for supplying the oil pressure to the VVT.

In order to attain the object, the present invention provides a hydraulic circuit for an internal combustion engine including a second oil pump as a dedicated pump for supplying oil to a WT in addition to a first oil pump for supplying the oil from an oil pan to a main gallery, wherein a variable valve timing mechanism has a rotor for being rotated in connection with at least one of an intake side camshaft and an exhaust side camshaft and a return spring for energizing to hold the rotor in a maximum phase angle state in stoppage of the internal combustion engine, and driving force of the second oil pump is obtained from the camshaft to which the rotor is connected.

According to the present invention having the structure described above, it is possible to reduce an increase in a torque required for operating the WT by the energizing force of the return spring. Consequently, it is possible to reduce a load of the WT required for changing a rotation phase of the camshaft, thereby operating the WT with a high responsiveness without requiring an increase in a size and a rise in oil pressure.

### BRIEF DESCRIPTION OF THE DRAWINGS

FIG. 1 is a typical diagram showing an example of a schematic structure of a hydraulic circuit for an internal combustion engine according to the present embodiment.
FIG. 2 is a sectional side view showing a structure of an oil passage between an OCV and an exhaust side WT.
FIG. 3 is a sectional plan view showing an internal structure of the exhaust side WT.
FIG. 4 is a typical diagram showing another example of the structure of the hydraulic circuit for the internal combustion engine according to the present embodiment.
FIG. 5 is a diagram showing a passage for oil in an engine.
FIG. 6 is a diagram showing a passage for oil in an engine using a WT.

### BEST MODE FOR CARRYING OUT THE INVENTION

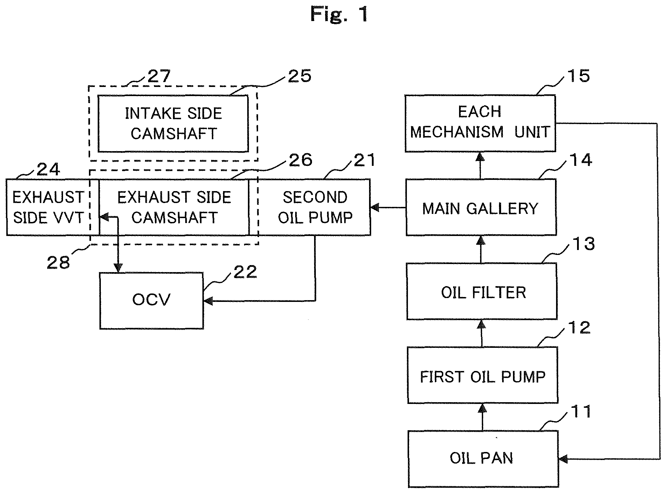

An embodiment according to the present invention will be described below with reference to the drawings. FIG. 1 is a typical diagram showing an example of a schematic structure of a hydraulic circuit for an internal combustion engine according to the present embodiment. In FIG. 1, components having the same reference numerals as those shown in FIG. 5 have the same functions.

In FIG. 1, a first oil pump 12 sucks oil from an oil pan 11 and supplies the oil to a main gallery 14 through an oil filter 13. In other words, the oil stored in the oil pan 11 is sucked by the first oil pump 12 and is pressure fed to the main gallery 14 through the oil filter 13. Then, the oil is supplied from the main gallery 14 to various mechanism units 15, and finally drops by its own weight and returns to the oil pan 11.

Moreover, a second oil pump 21 sucks the oil from the main gallery 14 and supplies the oil to an exhaust side VVT 24 through an OCV 22. The exhaust side VVT 24 changes a rotation phase of an exhaust side camshaft 26 with respect to a crankshaft (not shown) to an advance angle side and a delay angle side, thereby controlling a valve timing of an exhaust valve (not shown) to be opened/closed by the exhaust side camshaft 26.

An intake side camshaft 25 and the exhaust side camshaft 26 are supported rotatably by an intake side cylinder head 27 and an exhaust side cylinder head 28, respectively. In the present embodiment, the exhaust side camshaft 26 is provided with the exhaust side VVT 24. Moreover, the second oil pump 21 is connected to the exhaust side camshaft 26 to obtain the driving force of the second oil pump 21 from the exhaust side camshaft 26 (which will be described below in detail).

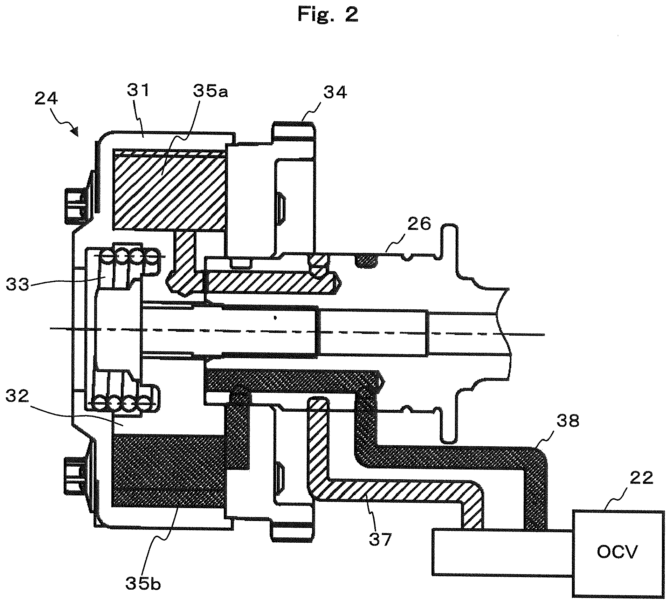

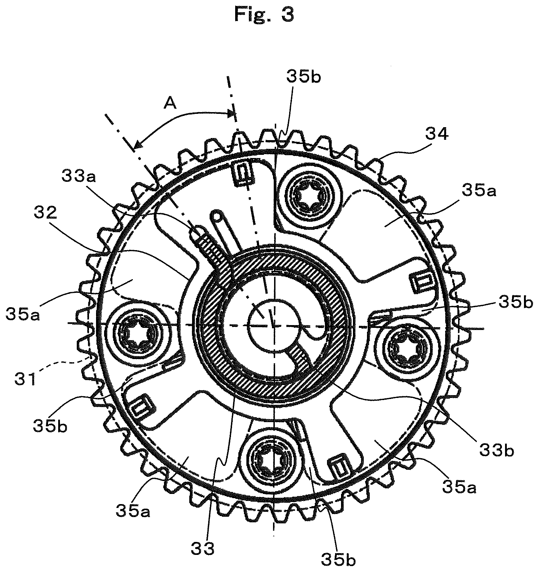

FIG. 2 is a sectional side view showing a structure of an oil passage between the OCV 22 and the exhaust side WT 24. Moreover, FIG. 3 is a sectional plan view showing an internal structure of the exhaust side VVT 24. As shown in FIG. 2, the exhaust side VVT 24 includes a housing 31, a rotor 32, a return spring 33 and a gear 34. The rotor 32 is connected to the exhaust side camshaft 26 and is thus rotated.

As shown in FIG. 3, the housing 31 has four spaces into which four protruded vanes provided in the rotor 32 are to be inserted. The vanes of the rotor 32 are configured rotatably to an advance angle side and a delay angle side within a range shown in an arrow A. Each of the four spaces is divided into an advance angle hydraulic chamber 35a and a delay angle hydraulic chamber 35b by the vanes of the rotor 32. The advance angle hydraulic chamber 35a and the delay angle hydraulic chamber 35b communicate with the OCV 22 through an advance angle oil passage 37 and a delay angle oil passage 38 respectively as shown in FIG. 2. The OCV 22 switches a supply-exhaust state of oil with respect to the advance angle hydraulic chamber 35a and the delay angle hydraulic chamber 35b.

For example, it is assumed that the oil is supplied from the OCV 22 to the advance angle hydraulic chamber 35a through the advance angle oil passage 37, and furthermore, the oil is returned from the delay angle hydraulic chamber 35b to the OCV 22 through the delay angle oil passage 38 and oil pressure is thus applied to the advance angle hydraulic chamber 35a. In this case, the rotor 32 is rotated toward an advance angle side (the delay angle hydraulic chamber 35b side) by energizing force based on the oil pressure in the advance angle hydraulic chamber 35a. FIG. 3 shows a state in which the oil pressure is applied to the advance angle hydraulic chamber 35a so that the vanes of the rotor 32 are moved to a most advance angle side.

The rotor 32 is rotated to the advance angle side so that the rotation phase of the exhaust side camshaft 26 is changed. As a result, a valve timing of an exhaust valve (not shown) to be opened/closed by the exhaust side camshaft 26 is advanced in an angle corresponding to the same phase as compared with a real situation.

On the other hand, it is assumed that the oil is supplied from the OCV 22 to the delay angle hydraulic chamber 35b through the delay angle oil passage 38, and furthermore, the oil is returned from the advance angle hydraulic chamber 35a to the OCV 22 through the advance angle oil passage 37 and oil pressure is thus applied to the delay angle hydraulic chamber 35b. In this case, the rotor 32 is rotated to the delay angle side (the advance angle hydraulic chamber 35a side) by energizing force based on the oil pressure in the delay angle hydraulic chamber 35b.

The rotor 32 is rotated to the delay angle side so that the rotation phase of the exhaust side camshaft 26 is changed. As a result, a valve timing of an exhaust valve (not shown) to be opened/closed by the exhaust side camshaft 26 is delayed in an angle corresponding to the same phase as compared with a real situation. When the oil pressure to be applied to the advance angle hydraulic chamber 35a and the delay angle hydraulic chamber 35b is held by the OCV 22, the rotation phase of the exhaust side camshaft 26 is also held exactly.

The return spring 33 is configured like a coil, and has one of ends fixed to the housing 31 with a body fixing hook 33a and the other end fixed to the rotor 32 with a rotor fixing hook 33b as shown in FIG. 3. Consequently, the return spring 33 is energized in such a manner that the rotor 32 is held in a most advance angle state (a state shown in FIG. 3) in stoppage of the engine (when the oil pressure is not applied).

A timing belt (not shown) is laid over the gear 34 and rotating force is transmitted from the crankshaft to the exhaust side camshaft 26 through the timing belt and the gear 34.

In the present embodiment, in the intake side camshaft 25 and the exhaust side camshaft 26, the second oil pump 21 is connected to the exhaust side camshaft 26 to which the rotor 32 is connected so that the driving force of the second oil pump 21 is obtained from the exhaust side camshaft 26. In other words, the exhaust side camshaft 26 is rotated upon receipt of the transmission of the rotating force from the crankshaft through the timing belt. The second oil pump 21 is driven with the rotating force of the exhaust side camshaft 26 set to be power, and sucks the oil from the main gallery 14 and supplies the oil to the OCV 22.

According to the present embodiment having such a structure, it is possible to reduce an increase in a torque required for operating the exhaust side WT 24 by the energizing force of the return spring 33. Consequently, it is possible to reduce a load of the exhaust side WT 24 required for changing the rotation phase of the exhaust side camshaft 26, thereby operating the exhaust side WT 24 with a high responsiveness without requiring an increase in a size and a rise in oil pressure.

Although the description has been given to the example in which the exhaust side WT 24 having the rotor 32 and the return spring 33 is provided on the exhaust side camshaft 26 and the driving force of the second oil pump 21 is obtained from the exhaust side camshaft 26 in the embodiment, the present invention is not restricted thereto.

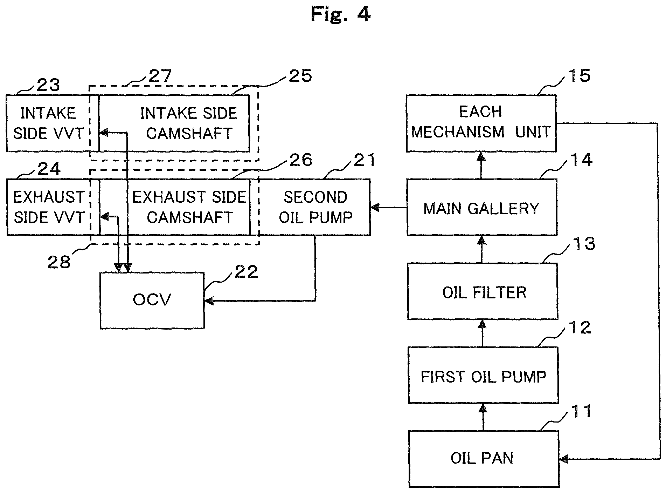

For example, as shown in FIG. 4, it is also possible to employ a structure in which both the intake side camshaft 25 and the exhaust side camshaft 26 are provided with the VVTs 23 and 24. In this case, the second oil pump 21 sucks the oil from the main gallery 14 and supplies the oil to the intake side WT 23 and the exhaust side WT 24 through the OCV 22. The intake side WT 23 and the exhaust side WT 24 change the rotation phases of the intake side camshaft 25 and the exhaust side camshaft 26 with respect to the crankshaft (not shown) to the advance angle side and the delay angle side, thereby controlling the valve timings of the intake valve and the exhaust valve (neither of them are shown) to be opened/closed by the intake side camshaft 25 and the exhaust side camshaft 26.

The intake side WT 23 shown in FIG. 4 also includes a rotor and a return spring for energizing to hold the rotor in a most delay angle state in the stoppage of the engine. Also in this case, the driving force of the second oil pump 21 is obtained from the exhaust side camshaft 26 to which the exhaust side WT 24 is connected. It is also possible to obtain the driving force of the second oil pump 21 from the intake side camshaft 25 to which the intake side WT 23 is connected. In the case in which the driving force of the second oil pump 21 is obtained from the intake side camshaft 25, the second oil pump 21 is preferably connected to the intake side camshaft 25.

Moreover, it is also possible to employ a structure in which the intake side WT 23 is provided in only the intake side camshaft 25. In this case, the second oil pump 21 is connected to the intake side camshaft 25, and sucks oil from the main gallery 14 and supplies the oil to the intake side WT 23 through the OCV 22. Then, the driving force of the second oil pump 21 is obtained from the intake side camshaft 25 to which the intake side WT 23 is connected.

In the embodiment, moreover, the description has been given to the example in which the second oil pump 21 sucks the oil from the main gallery 14 and supplies the oil to the exhaust side WT 24 (both of the VVTs 23 and 24 in the case of FIG. 4). However, a place where the second oil pump 21 sucks the oil is not restricted to the main gallery 14. For example, the second oil pump 21 may suck the oil from a downstream of the first oil pump 12 or may suck the oil from the oil pan 11. Herein, the oil pressure required for the second oil pump 21 is lower in the suction of the oil from the downstream of the first oil pump 12 provided in an upper part of the oil pan 11 than that in the suction of the oil from the oil pan 11. In this respect, it is preferable that the oil should be sucked from the downstream of the first oil pump 12.

In addition, the embodiment is only illustrative for concreteness to carry out the present invention and the technical scope of the present invention should not be thereby construed to be restrictive. In other words, the present invention can be carried out in various configurations without departing from the gist or main features thereof.

### EXPLANATION OF DESIGNATION

- 12: first oil pump
- 14: main gallery
- 21: second oil pump
- 22: OCV
- 23: intake side WT
- 24: exhaust side WT
- 25: intake side camshaft
- 26: exhaust side camshaft
- 32: rotor
- 33: return spring

## Claims

1. A hydraulic circuit for an internal combustion engine including a variable valve timing mechanism for varying a rotation phase of at least one of an intake side camshaft and an exhaust side camshaft with respect to a crankshaft of the internal combustion engine, thereby changing a valve timing of at least one of an intake valve and an exhaust valve which are to be opened/closed by the intake side camshaft and the exhaust side camshaft, the hydraulic circuit comprising:
a first oil pump for supplying oil from an oil pan to a main gallery; and
a second oil pump for supplying the oil to the variable valve timing mechanism,
the variable valve timing mechanism including;
a rotor for being rotated in connection with at least one of the intake side camshaft and the exhaust side camshaft; and
a return spring for energizing to hold the rotor in a maximum phase angle state in stoppage of the internal combustion engine,
driving force of the second oil pump being obtained from the camshaft to which the rotor is connected.

2. The hydraulic circuit for the internal combustion engine according to claim 1, wherein the rotor is connected to the exhaust side camshaft and the driving force of the second oil pump is obtained from the exhaust side camshaft.
